# FASCICULE DE BREVET EUROPEEN

(11) **EP 2 524 410 B1**
(45) Date de publication et mention de la délivrance du brevet: **16.10.2013**
(21) Numéro de dépôt: 11701477.9
(22) Date de dépôt: 12.01.2011
(51) Int. Cl.: H01M 4/485, H01M 2/26, H01M 4/48, H01M 4/58, H01M 4/66, H01M 10/50, H01M 10/0525, H01M 4/505, H01M 4/525, H01M 4/587, H01M 10/0564, H01M 16/00

(54) **GENERATEUR ELECTROCHIMIQUE AU LITHIUM COMPRENANT DEUX TYPES DE CELLULES ELECTROCHIMIQUES DISTINCTES**
ELEKTROCHEMISCHER GENERATOR AUF LITHIUM-BASIS MIT ZWEI UNTERSCHIEDLICHEN ARTEN VON ELEKTROCHEMISCHEN ZELLEN
LITHIUM-BASED ELECTROCHEMICAL GENERATOR INCLUDING TWO TYPES OF DISTINCT ELECTROCHEMICAL CELLS

(30) Priorité: 14.01.2010 FR 1050230
(43) Date de publication de la demande: 21.11.2012
(73) Titulaire: Commissariat à l'Énergie Atomique et aux Énergies Alternatives, 75015 Paris (FR)
(72) Inventeur: FUSALBA, Florence, 38210 St. Quentin Sur Isere (FR); MARTINET, Sébastien, 38210 St. Quentin Sur Isere (FR)
(74) Mandataire: Ilgart, Jean-Christophe
(86) Numéro de dépôt international: PCT/EP2011/050354
(87) Numéro de publication internationale: WO 2011/086102

(56) Documents cités:
- WO-A2-2005/055344
- FR-A1- 2 927 472

## Description

### DOMAINE TECHNIQUE

La présente invention a trait à un générateur à architecture dite bipolaire comprenant deux types de cellules électrochimiques, permettant d'associer au sein d'un même générateur des cellules délivrant une tension importante et présentant ainsi une grande capacité de stockage avec des cellules dites de sécurité délivrant une tension moindre mais à base de matériaux plus stables.

Les générateurs de l'invention trouvent leur application dans des secteurs, où énergie et puissance sont requises tout en nécessitant d'importantes normes de sécurité.

Le domaine de l'invention peut être ainsi considéré comme le domaine des dispositifs de stockage d'énergie.

### ÉTAT DE LA TECHNIQUE ANTÉRIEURE

Parmi les dispositifs de stockage d'énergie existants, on peut citer les générateurs électrochimiques fonctionnant sur le principe de cellules électrochimiques montées en série voire en parallèle, aptes à délivrer un courant électrique, grâce à la présence, dans chacune d'entre elles, d'un couple d'électrodes (respectivement, une anode et une cathode) séparé par un électrolyte, les électrodes étant en des matériaux spécifiques aptes à réagir ensemble selon une réaction d'oxydo-réduction moyennant quoi il y a production d'électrons à l'origine du courant électrique et production d'ions qui vont circuler d'une électrode vers l'autre par le biais d'un électrolyte.

Des générateurs spécifiques souscrivant à ce principe sont des générateurs au lithium, qui fonctionnent sur le principe de l'intercalation-désintercalation du lithium.

Plus précisément, la réaction à l'origine de la production de courant (c'est-à-dire lorsque le générateur est en mode de décharge) met en jeu le transfert, par l'intermédiaire d'un électrolyte conducteur d'ions lithium, de cations lithium provenant d'une électrode négative qui viennent s'intercaler dans le réseau accepteur de l'électrode positive, tandis que des électrons issus de la réaction à l'électrode négative vont alimenter le circuit extérieur auquel sont reliées les électrodes positive et négative.

Les premiers générateurs au lithium comportaient du métal lithium au niveau de leurs électrodes négatives, ce qui fournissait une tension élevée et d'excellentes densités d'énergie massique et volumique. Toutefois, les recherches ont révélé que des recharges répétées de ce type de générateur s'accompagnaient inéluctablement de la formation de dendrites de lithium venant, le plus souvent, détériorer le séparateur comprenant l'électrolyte.

Afin de contourner les problèmes d'instabilité, de sécurité et de durée de vie inhérents au métal lithium utilisé pour constituer des électrodes négatives, les recherches ont été réorientées pour mettre en place des générateurs à base de lithium non métallique, notamment sur la base de cellules électrochimiques comportant les types d'électrodes suivants :
- une électrode négative à base d'un matériau carboné, tel que du graphite ;
- une électrode positive à base d'oxyde de métal de transition lithié de type LiMO₂, où M désigne Co, Ni, Mn.

C'est ce type de configuration que l'on retrouve dans les générateurs décrits dans US 5,595,839 qui divulgue une architecture de pile constituée d'un empilement de cellules électrochimiques, la jonction entre deux cellules électrochimiques adjacentes étant assurée par une structure bipolaire unitaire comprenant une électrode positive (appartenant à une cellule) et une électrode négative (appartenant à la cellule adjacente) disposées de part et d'autre de deux substrats accolés formant un ensemble, le substrat du côté électrode négative étant un substrat en cuivre et le substrat du côté électrode positive étant un substrat en aluminium.

C'est aussi ce type de configuration que l'on retrouve dans WO 03/047021 avec, à la fois du côté électrode positive et du côté électrode négative, un substrat en aluminium.

De par la constitution des électrodes, chaque cellule est apte à délivrer une tension importante et ainsi une forte densité d'énergie, ce qui fait que, lorsque toutes les cellules d'un empilement fonctionnent, ceci peut générer une élévation importante de la température de l'empilement, voire un emballement thermique qui se propage de cellules à cellules, qui, s'il n'est pas jugulé, peut entraîner une dégradation irréversible du générateur, tel qu'une destruction par fusion des séparateurs contenant l'électrolyte. Il est donc parfois indispensable de pourvoir de tels générateurs au moyen de systèmes de sécurité spécifiques, tels que des systèmes de coupe-circuit, des systèmes d'évent.

Toutefois, l'apport de ce type de systèmes de sécurité nuit à la compacité du générateur et contribue également à une réduction des performances énergétiques, massiques et volumiques de ces accumulateurs.

Le document FR 2 927 472 a trait à un système hybride bipolaire de stockage d'énergie électrique comprenant au moins un accumulateur électrochimique et au moins un supercondensateur, caractérisé en ce que le système de stockage forme un seul ensemble par la présence d'une électrode bipolaire commune à l'accumulateur électrochimique et au supercondensateur, l'électrode bipolaire commune comprenant un support électriquement conducteur supportant sur l'une de ses faces une électrode de l'accumulateur électrochimique et sur une autre face une électrode du supercondensateur.

L'accumulateur électrochimique est décrit comme comprenant au moins une cellule électrochimique comprenant une anode et une cathode électro-actives séparées par un séparateur poreux contenant un électrolyte, l'anode électro-active comprenant du graphite et/ou du Li₄Ti₅O₁₂ tandis que la cathode électro-active comprend du LiFePO₄ et/ou du LiCoO₂ et/ou du LiNi_{0,5}mn_{1,5}O₄.

Le supercondensateur est décrit comme comprenant au moins une cellule comprenant une anode et une cathode électro-actives séparées par un électrolyte, l'anode électro-attractive de la cellule du supercondensateur comprenant du Li₄Ti₅O₁₂, tandis que la cathode électro-attractive comprend du carbone activé.

Les inventeurs se sont fixé ainsi pour objectif de proposer des générateurs basés sur l'architecture bipolaire, qui puissent délivrer une forte densité d'énergie tout en étant intrinsèquement sûrs, c'est-à-dire sans nécessiter le recours à des systèmes de sécurité spécifiques tels que ceux, mentionnés ci-dessus.

### EXPOSÉ DE L'INVENTION

Les inventeurs ont eu l'idée surprenante d'associer au sein d'un même générateur deux types distincts de cellules électrochimiques, dont l'un des types est apte à constituer des éléments de sécurité vis-à-vis de l'autre type de cellules électrochimiques en cas d'emballement thermique due à la réaction électrochimique se produisant dans cet autre type de cellules.

Ainsi, l'invention a trait à un générateur électrochimique comprenant :
* au moins une première cellule électrochimique comprenant :
   - une électrode positive comprenant un matériau choisi parmi les oxydes lithiés comprenant du manganèse de structure spinelle, les oxydes lithiés de structure lamellaire et les mélanges de ceux-ci ;
   - une électrode négative comprenant un matériau choisi parmi les matériaux carbonés, les oxydes mixtes de lithium et de titane, le dioxyde de titane et les mélanges de ceux-ci ;
   - un électrolyte compris entre ladite électrode positive et ladite électrode négative ; et
* au moins une seconde cellule électrochimique comprenant :
   - une électrode positive comprenant un matériau choisi parmi les oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs ;
   - une électrode négative comprenant un matériau choisi parmi les oxydes mixtes de lithium et de titane, le dioxyde de titane et les mélanges de ceux-ci ; et
   - un électrolyte compris entre ladite électrode positive et ladite électrode négative ;
au moins l'une desdites première cellule électrochimique et au moins l'une desdites seconde cellule électrochimique étant liée l'une à l'autre par un substrat conducteur de l'électricité supportant sur l'une de ses faces une électrode de ladite première cellule électrochimique et sur une autre face une électrode de ladite seconde cellule électrochimique.

Avant d'entrer plus en détail dans l'exposé de cette invention, nous précisons les définitions suivantes.

Par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

Par le choix des matériaux constitutifs des électrodes des première et seconde cellules électrochimiques, l'on se retrouve ainsi avec une première cellule électrochimique apte à délivrer une tension importante, s'accompagnant d'une libération importante d'énergie (on peut parler ainsi de cellule « à haute énergie ») et avec une seconde cellule électrochimique apte à délivrer une tension moindre que la première cellule, à des vitesses de charge et décharge plus rapides (on peut parler ainsi de cellule « à haute puissance ») et qui va, grâce à la stabilité thermique des matériaux constitutifs de ses électrodes par rapport à celle des matériaux de la première cellule, pouvoir permettre une bonne dissipation de la chaleur émise par la première cellule et éviter ainsi un phénomène de propagation d'emballement thermique. La seconde cellule électrochimique joue ainsi le rôle de cellules « tampons » permettant d'assurer la sécurité du générateur.

Qui plus est, grâce aux générateurs de l'invention, il est possible d'obtenir, en sortie de ceux-ci, une tension de sortie modulable selon l'application envisagée, selon que l'on connecte à la fois les première et seconde cellules électrochimiques ou que l'on connecte seulement une partie d'entre elles. En connectant, selon l'application envisagée, seulement une partie des cellules en vue de délivrer une tension, on procède ainsi à une mise en réserve de la partie des cellules non connectées et on peut ainsi améliorer la durée de vie des générateurs de l'invention par la gestion de mise en opération des cellules.

Pour ce faire, les générateurs de l'invention peuvent être pourvus de connexions électriques à ladite première cellule électrochimique et de connexions électriques à ladite seconde cellule électrochimique.

Du fait que les générateurs de l'invention peuvent permettre, grâce à la présence des secondes cellules électrochimiques, de s'affranchir des systèmes de sécurité, l'on accède ainsi à des générateurs présentant une résistance interne diminuée par rapport à un générateur présentant de tels systèmes, ce qui peut s'avérer important pour une application en puissance ou pour un fonctionnement à basse température.

Qui plus est, la présence de cellule(s) du type des secondes cellules électrochimiques décrites ci-dessus permet de s'affranchir des problèmes liés à la dégradation de l'électrolyte voire du séparateur contenant l'électrolyte, ces cellules étant aptes à absorber sans dégradation l'énergie délivrée par les cellules du type des premières cellules électrochimiques définies ci-dessus.

Du fait de l'utilisation d'un support conducteur de l'électricité commun à la première cellule électrochimique et à la seconde cellule électrochimique, on accède également à des architectures de générateur plus compactes, plus robustes et présentant une résistance interne diminuée (ce qui peut être important pour une application en puissance ou pour un fonctionnement à basse température).

Comme mentionné ci-dessus, la première cellule électrochimique comprend, comme matériau d'électrode positive, un matériau choisi parmi les oxydes lithiés comprenant du manganèse de structure spinelle et les oxydes lithiés de structure lamellaire.

Parmi les oxydes lithiés comprenant du manganèse de structure spinelle, on peut citer les oxydes lithiés répondant à la formule suivante :

Li₁₋ₐNi_{0,5-b}Mn_{1,5-c}O_{4-d}

avec a, b, c et d étant compris entre -0,5 et +0,5, par exemple entre -0,1 et +0,1, c'est-à-dire que chacun des paramètres a, b, c et d est supérieur ou égal à -0,5 et inférieur ou égal à +0,5 (lorsque a, b, c et d sont compris entre -0,5 et +0,5), par exemple, supérieur ou égal à -0,1 et inférieur ou égal à +0,1 (lorsque a, b, c et d sont compris entre -0,1 et +0,1).

En particulier, un oxyde lithié conforme à cette définition et particulièrement avantageux est l'oxyde de formule LiNi_{0,5}Mn_{1,5}O₄, qui présente la particularité de présenter un potentiel d'insertion/désinsertion du lithium de l'ordre de 4,7 V (ce potentiel étant exprimé par rapport au couple de référence Li+/Li).

On peut citer également comme oxydes lithiés comprenant du manganèse de structure spinelle, les oxydes lithiés de formules LiMn₂O₄ ou LiNiMnO₄.

Parmi les oxydes lithiés de structure lamellaire, on peut citer avantageusement des oxydes lithiés répondant à la formule suivante :

LiMO₂

dans laquelle M est un élément choisi parmi Ni, Co, Mn, Al et les mélanges de ceux-ci.

A titre d'exemples de tels oxydes, on peut citer les oxydes lithiés LiCoO₂, LiNiO₂ et les oxydes mixtes Li(Ni,Co,Mn)O₂ (tel que Li(Ni_{1/3}Mn_{1/3}Co_{1/3})O₂) connu également sous la dénomination NMC), Li(Ni,Co,Al)O₂ (tel que Li(Ni_{0,8}Co_{0,15}Al_{0,05})O₂ connu également sous la dénomination NCA) ou Li(Ni,Co,Mn,Al)O₂.

En particulier, les oxydes Li (Ni_{0,8}Co_{0,15}Al_{0,05})O₂ et Li (Ni_{1/3}Mn_{1/3}Co_{1/3})O₂ permettent d'atteindre des performances électrochimiques similaires ou sensiblement plus élevées que les oxydes du type LiMO₂ (avec M représentant un seul métal et non un mélange) pour un coût inférieur ou égal et une stabilité chimique améliorée en particulier à l'état chargé.

Il peut s'agir également d'oxydes lithiés de structure lamellaire répondant à la formule générale suivante :

LiM₂O₃

dans laquelle M est un élément choisi parmi Ni, Co, Mn, Al et les mélanges de ceux-ci.

A titre d'exemples de tels oxydes, on peut citer les oxydes lithiés de structure lamellaire LiMn₂O₃.

Le matériau d'électrode positive peut être également un mélange de LiMO₂ et de LiM₂O₃ correspondant aux formules telles que définies ci-dessus.

L'électrode négative de la première cellule électrochimique peut être une électrode négative en matériau carboné, qui peut être :
- du carbone, par exemple, sous l'une de ses formes allotropiques, telles que le graphite ;
- un matériau composite comprenant du carbone et un autre élément tel que du silicium et de l'étain.

L'électrode négative de la première cellule électrochimique peut être également une électrode négative en un matériau choisi parmi les oxydes mixtes de titane et de lithium, tel Li₉Ti₅O₁₂, le dioxyde de titane et les mélanges de ceux-ci.

Par le choix des matériaux constitutifs des électrodes positive et négative de la première cellule électrochimique, on accède ainsi à une cellule électrochimique apte à délivrer une tension importante et ainsi, une énergie importante, qui peut s'accompagner d'un dégagement de chaleur important.

Pour assurer la propagation de la chaleur sans nuisance pour l'intégrité du générateur, au moins une des premières cellules électrochimiques est en contact avec une seconde cellule électrochimique via un substrat conducteur de l'électricité tel que défini ci-dessus, la seconde cellule électrochimique étant à base d'électrodes en des matériaux aptes, du fait de leur stabilité thermique, à engranger la chaleur émise par la réaction se produisant au niveau de la première cellule électrochimique.

Pour ce faire, le choix des matériaux constitutifs des électrodes de la seconde cellule électrochimique est effectué de façon motivée pour remplir ces conditions de stabilité thermique.

Ainsi, la seconde cellule électrochimique, comme mentionné ci-dessus, comprend, comme électrode positive, une électrode en un matériau choisi parmi les oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Avantageusement, X peut être P, auquel cas l'oxyde lithié à charpentes polyanioniques est un phosphate de lithium, tel que LiFePO₄.

X peut être Si, auquel cas l'oxyde lithié est un silicate de lithium.

Comme électrode négative pour la seconde cellule électrochimique, il s'agit d'une électrode en un matériau choisi parmi les oxydes mixtes de titane et de lithium, de préférence, Li₉Ti₅O₁₂, le dioxyde de titane et les mélanges de ceux-ci.

De par la nature des matériaux constitutifs des électrodes positives et négatives de la seconde cellule électrochimique, cette dernière, tout en étant apte à délivrer une tension moindre que la première cellule électrochimique, présente une importante stabilité thermique, ce qui fait qu'elle va pouvoir assurer une fonction de cellule de « sécurité » en pouvant absorber l'énergie délivrée par la première cellule électrochimique évitant ainsi toute propagation d'un éventuel emballement thermique.

Un générateur spécifique à l'invention peut être un générateur électrochimique comprenant au moins une première cellule électrochimique comprenant une électrode positive en LiNi_{0,5}Mn_{1,5}O₄ et une électrode négative en graphite et au moins une seconde cellule électrochimique comprenant une électrode positive en LiFePO₄ et une électrode négative en Li₄Ti₅O₁₂.

Que ce soit pour la première cellule électrochimique ou pour la seconde cellule électrochimique, l'électrode positive et l'électrode négative d'une cellule donnée sont séparées l'une de l'autre par un électrolyte, lequel peut être de même nature pour toutes les cellules du générateur, lequel électrolyte pouvant imprégner un séparateur, par exemple, en matériau polymérique.

L'électrolyte peut comprendre un solvant dans lequel est dissous un sel de lithium. Le solvant peut être un solvant carbonate, tel que du carbonate d'éthylène, du carbonate de propylène, du carbonate de diméthyle, du carbonate de diéthyle et des mélanges de ceux-ci, un solvant éther tel que le diméthoxyéthane, le dioxolane, le dioxane et des mélanges de ceux-ci et/ou un solvant nitrile, tel que l'acétonitrile.

Le sel de lithium peut, quant à lui, être choisi dans le groupe constitué par LiPF₆, LiClO₄, LiBF₄, LiAsF₆.

Avantageusement, l'électrolyte peut être également un liquide ionique à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe.

Les liquides ioniques utilisés comme électrolyte permettent un bon transfert de charge et une plus grande stabilité thermique, sont non volatils et non inflammables et permettent de ce fait d'augmenter le degré de sécurité des générateurs dans lesquels ils sont inclus. Ils permettent ainsi un large domaine de température d'opération.

A titre d'exemples de liquides ioniques, on peut citer des liquides ioniques à base d'anions hydrophobes comme le trifluorométhanesulfonate (CF₃SO₃), le bis (trifluorométhanesulfonate imide [(CF₃SO₂)₂N] et le tris(trifluorométhanesulfonate) méthide [(CF₃ SO₂)₃C].

Le support conducteur de l'électricité susmentionné est avantageusement en aluminium.

Les générateurs de l'invention peuvent comprendre une ou plusieurs cellules du type de la première cellule électrochimique décrite ci-dessus associées à plusieurs cellules électrochimiques du type de la seconde cellule électrochimique décrite ci-dessus, sachant que l'une au moins des cellules du type de la première cellule électrochimique sera liée à l'une au moins des cellules du type de la seconde cellule électrochimique telle que définie ci-dessus par un substrat conducteur de l'électricité supportant sur l'une de ses faces une électrode de la cellule du type de la première cellule électrochimique et sur une autre face une électrode de la cellule du type de la seconde cellule électrochimique.

Les générateurs de l'invention conformes à l'invention sont particulièrement adaptés à des produits nécessitant des architectures d'intégration compactes (tels que dans les systèmes embarqués, les systèmes autonomes), où une énergie importante est requise (ce paramètre étant assuré dans notre cas de figure, par les cellules du type des premières cellules électrochimiques décrites ci-dessus) et une puissance importante est requise (ce paramètre étant assuré dans notre cas de figure, par les cellules du type des deuxièmes cellules électrochimiques décrites ci-dessus) tout en répondant à des normes de sécurité sévères (la sécurité étant assurée, selon l'invention, par les cellules du type des secondes cellules électrochimiques). Ce type d'exigences peut se rencontrer dans le domaine automobile et plus généralement dans le domaine des produits grands publics. Les générateurs de l'invention permettent ainsi d'intégrer à la fois sécurité et fortes capacités de stockage en adéquation avec la contrainte de compacité qu'implique une utilisation embarquée.

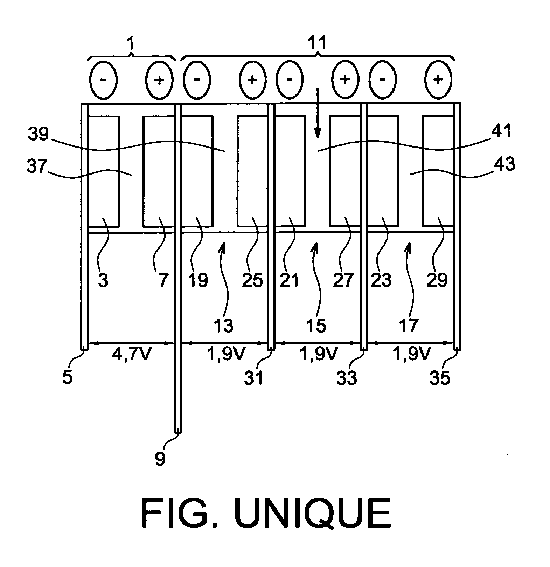

L'invention va, à présent, être décrite en référence au mode de réalisation particulier défini ci-dessous en référence à la figure annexée.

### BRÈVE DESCRIPTION DES DESSINS

La figure unique représente un générateur conforme à l'invention selon un mode de réalisation particulier de celle-ci.

### EXPOSÉ DÉTAILLÉ DE MODES DE RÉALISATION PARTICULIERS

La figure unique annexée représente schématiquement un générateur de stockage d'énergie électrique conforme à un mode de réalisation particulier de l'invention.

La référence 1 désigne une cellule électrochimique, dite "cellule de haute énergie" du type des premières cellules électrochimiques décrites ci-dessus, cette cellule comprenant respectivement :
- une électrode négative 3, par exemple, en graphite, déposée sur un support conducteur de l'électricité 5, par exemple en cuivre ;
- une électrode positive 7, par exemple en LiNi_{0,5}Mn_{1,5}O₄ déposée sur un support conducteur de l'électricité 9, avantageusement en aluminium.

La référence 11 désigne la partie "sécurité" du générateur composée de trois cellules électrochimiques identiques numérotées respectivement 13, 15 et 17 montées en série, du type des secondes cellules électrochimiques décrites ci-dessus.

Chacune des cellules électrochimiques 13, 15 et 17 comprend respectivement :
- une électrode négative (respectivement 19, 21 et 23), par exemple en Li₄Ti₅O₁₂ ;
- une électrode positive (respectivement 25, 27 et 29), par exemple en LiFePO₄

La cellule électrochimique 13 est en contact avec la cellule électrochimique 1 via le substrat conducteur de l'électricité 9, l'électrode négative 19 étant déposée sur ledit substrat, sur la face opposée à celle où est déposée l'électrode positive 7 de la cellule électrochimique 1.

La cellule électrochimique 15 est en contact avec la cellule électrochimique 13 via un substrat conducteur de l'électricité 31, une face de ce substrat étant occupée par l'électrode positive 25 de la cellule électrochimique 13 et la face opposée étant occupée par l'électrode négative 21 de la cellule électrochimique 15 et est en contact avec la cellule électrochimique 17 via un substrat conducteur de l'électricité 33, une face de ce substrat étant occupée par l'électrode positive 27 de la cellule électrochimique 15 et la face opposée étant occupée par l'électrode négative 23 de la cellule électrochimique 17, l'électrode positive 29 de la cellule électrochimique 17 étant déposée sur un substrat conducteur de l'électricité 35.

Les substrats conducteurs de l'électricité 9, 31, 33 et 35 sont avantageusement en aluminium.

Dans chaque cellule électrochimique est prévu un électrolyte, tel que défini ci-dessus, entre l'électrode négative et l'électrode positive (respectivement numéroté 37, 39, 41 et 43 sur la figure).

Les différentes cellules constitutives de ce générateur peuvent être connectées électriquement les unes aux autres par l'intermédiaire des substrats conducteurs de l'électricité 5, 9, 31, 33 et 35 (appelés dans la suite de cet exposé respectivement bornes 1, 2, 3, 4 et 5).

Sur la figure annexée, sont reportées les tensions disponibles aux bornes de chaque cellule électrochimique, à savoir :
- une tension de 4,7 V (exprimée par rapport au couple Li⁺/Li) entre les bornes 1 et 2 de la première cellule électrochimique 1, lorsque l'électrode négative est en graphite et l'électrode positive est en LiNi_{0,5}Mn_{1,5}O₄ ;
- une tension de 1,9 V (exprimée par rapport au couple Li⁺/Li) aux bornes de chacun des cellules électrochimiques 13, 15 et 17 (à savoir respectivement entre les bornes 2 et 3, entre les bornes 3 et 4 et entre les bornes 4 et 5), lorsque l'électrode négative est Li₄Ti₅O₁₂ et l'électrode positive est LiFePO₄.

Ainsi, il est possible d'ajuster la valeur de la tension disponible en fonction de l'application visée, les valeurs de tension disponible pouvant être les suivantes :
- une tension de 4,7 V en connectant électriquement uniquement les bornes 1 et 2 ;
- une tension de 1,9 V en connectant électriquement l'une des cellules électrochimiques 13, 15 ou 17 (via leurs bornes respectives 2 et 3, 3 et 4 ou 4 et 5) ;
- une tension de 5,7 V en connectant électriquement les trois cellules électrochimiques 13, 15 ou 17 entre les bornes 2 et 5 ;
- une tension de 10,4 V en connectant électriquement à la fois la cellule électrochimique 1 et les trois cellules électrochimiques 13, 15 et 17 entre les bornes 1 et 5.

En connectant les bornes 1 et 2, c'est-à-dire en faisant fonctionner uniquement la cellule dite de « haute-énergie », les cellules électrochimiques adjacentes 13, 15 et 17 vont être aptes à absorber l'énergie dissipée par la cellule 1 en fonctionnement, sans que cette énergie ne dégrade les matériaux constitutifs des électrodes des cellules 13, 15 et 17, du fait de la stabilité thermique inhérente à ses matériaux. Il en est de même lorsque la cellule dite de « haute-énergie » fonctionne en parallèle avec au moins l'une des cellules électrochimiques 13, 15 et 17, ces cellules électrochimiques tout en délivrant une tension pouvant participer, sans dégradation, à la dissipation de chaleur émise par la cellule électrochimique 1.

## Revendications

1. Générateur électrochimique comprenant :
* au moins une première cellule électrochimique comprenant :
- une électrode positive comprenant un matériau choisi parmi les oxydes lithiés comprenant du manganèse de structure spinelle, les oxydes lithiés de structure lamellaire et les mélanges de ceux-ci ;
- une électrode négative comprenant un matériau choisi parmi les matériaux carbonés, les oxydes mixtes de lithium et de titane, le dioxyde de titane et les mélanges de ceux-ci ;
- un électrolyte compris entre ladite électrode positive et ladite électrode négative ; et
* au moins une seconde cellule électrochimique comprenant :
- une électrode positive comprenant un matériau choisi parmi les oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs ;
- une électrode négative comprenant un matériau choisi parmi les oxydes mixtes de lithium et de titane, le dioxyde de titane et les mélanges de ceux-ci ; et
- un électrolyte compris entre ladite électrode positive et ladite électrode négative ;
au moins l'une desdites premières cellules électrochimiques et au moins l'une desdites secondes cellules électrochimiques étant liées l'une à l'autre par un substrat conducteur de l'électricité supportant sur l'une de ses faces une électrode de ladite première cellule électrochimique et sur une autre face une électrode de ladite seconde cellule électrochimique.

2. Générateur selon la revendication 1, dans lequel l'oxyde lithié comprenant du manganèse de structure spinelle répond à la formule suivante :
Li₁₋ₐNi_{0,5-b}Mn_{1,5-c}O_{4-d}
avec a, b, c et d étant compris entre -0,5 et +0,5.

3. Générateur selon la revendication 1 ou 2, dans lequel l'oxyde lithié comprenant du manganèse de structure spinelle est LiNi_{0,5}Mn_{1,5}O₄.

4. Générateur selon la revendication 1 ou 2, dans lequel l'oxyde lithié comprenant du manganèse de structure spinelle est LiMn₂O₄ ou LiNiMnO₄.

5. Générateur selon la revendication 1, dans lequel l'oxyde lithié de structure lamellaire répond à la formule suivants :
LiMO₂
dans laquelle M est un élément choisi parmi Ni, Co, Mn, Al et les mélanges de ceux-ci.

6. Générateur selon la revendication 1, dans lequel l'oxyde lithié de structure lamellaire répond à la formule suivante :
LiM₂O₃
dans laquelle M est un élément choisi parmi Ni, Co, Mn, Al et les mélanges de ceux-ci.

7. Générateur selon la revendication 1, dans lequel l'électrode positive de la première cellule électrochimique est en un matériau consistant en un mélange de LiMO₂ tel que défini à la revendication 5 et de LiM₂O₃ tel que défini à la revendication 6.

8. Générateur selon l'une quelconque des revendications précédentes, dans lequel l'oxyde lithié à charpentes polyanioniques est LiFePO₄.

9. Générateur selon l'une quelconque des revendications précédentes, dans lequel le matériau carboné est du carbone ou un matériau composite comprenant du carbone et un élément chimique choisi parmi Sn, Si.

10. Générateur selon l'une quelconque des revendications précédentes, dans lequel le matériau carboné est du carbone sous forme graphite.

11. Générateur selon l'une quelconque des revendications précédentes, dans lequel l'oxyde mixte de lithium et de titane est Li₄Ti₅O₁₂.

12. Générateur selon la revendication 1, comprenant au moins une première cellule électrochimique comprenant une électrode positive en LiNi_{0,5}Mn_{1,5}O₄ et une électrode négative en graphite et au moins une seconde cellule électrochimique comprenant une électrode positive en LiFePO₄ et une électrode négative en Li₄Ti₅O₁₂.

13. Générateur selon l'une quelconque des revendications précédentes, dans lequel le substrat conducteur de l'électricité est de l'aluminium.

14. Générateur selon l'une quelconque des revendications précédentes, dans lequel l'électrolyte est un liquide ionique.

15. Générateur selon l'une quelconque des revendications précédentes, étant pourvu de connexions électriques à ladite première cellule électrochimique et de connexions électriques à ladite seconde cellule électrochimique.

## Patentansprüche

1. Elektrochemischer Generator umfassend :
* mindestens eine erste elektrochemische Zelle umfassend:
- eine positive Elektrode umfassend ein Material ausgewählt aus lithiumhaltigen Oxiden umfassend Mangan in Spinellstruktur, lithiumhaltigen Oxiden von lamellarer Struktur und den Mischungen davon;
- eine negative Elektrode umfassend ein Material ausgewählt aus kohlenstoffhaltigen Materialien, Mischoxiden von Lithium und Titan, Titandioxid und Mischungen davon ;
- einen Elektrolyt zwischen der positiven Elektrode und der negativen Elektrode ; und
* mindestens eine zweite elektrochemische Zelle umfassend:
- eine positive Elektrode umfassend ein Material ausgewählt aus lithiumhaltigen Oxiden mit polyanionischer Struktur nach der Formel LiM_{y}(XO_{z})ₙ, wobei M ein Element ausgewählt aus Mn, Fe, Co, Ni, Cu, Mg, Zn, V, Ca, Sr, Ba, Ti, Al, Si, B, und Mo darstellt, X ein Element ausgewählt aus P, Si, Ge, S und As darstellt, wobei y, z und n positive ganze Zahlen sind;
- eine negative Elektrode umfassend ein Material ausgewählt aus Mischoxiden von Lithium und Titan, Titanoxid und Mischungen davon ; und
- einen Elektrolyt zwischen der positiven Elektrode und der negativen Elektrode ;
wobei mindestens eine der ersten elektrochemischen Zellen und mindestens eine der zweiten elektrochemischen Zellen durch ein elektrisch leitfähiges Substrat verbunden sind, welches auf einer seiner Seiten eine Elektrode der ersten elektrochemischen Zelle und auf einer anderen Seite eine Elektrode der zweiten elektrochemischen Zelle trägt.

2. Generator nach Anspruch 1, wobei das lithiumhaltige Oxid, welches Mangan in Spinellstruktur umfasst, der folgenden Formel entspricht :
Li₁₋ₐN_{0,5-b}Mn_{1,5-c}O_{4-d}
wobei a, b, c und d zwischen -0,5 und +0,5 liegen.

3. Generator nach Anspruch 1 oder 2, wobei das lithiumhaltige Oxid, welches Mangan in Spinellstruktur umfasst, LiNi_{0,5}Mn_{1,5}O₄ ist.

4. Generator nach Anspruch 1 oder 2, wobei das lithiumhaltige Oxid, welches Mangan in Spinellstruktur umfasst, LiMn₂O₄ oder LiNiMnO₄ ist.

5. Generator nach Anspruch 1, wobei das lithiumhaltige Oxid von lamellarer Struktur der folgenden Formel entspricht :
LiMO₂
wobei M ein Element ist, welches aus Ni, Co, Mn, Al und Mischungen davon ausgewählt ist.

6. Generator nach Anspruch 1, wobei das lithiumhaltige Oxid von lamellarer Struktur der folgenden Formel entspricht :
LiM₂O₃
wobei M ein Element ist, welches aus Ni, Co, Mn, Al und Mischungen davon ausgewählt ist.

7. Generator nach Anspruch 1, wobei die positive Elektrode der ersten elektrochemischen Zelle aus einem Material hergestellt ist, welches aus einer Mischung von LiMO₂ nach Anspruch 5 und von LiM₂O₃ nach Anspruch 6 besteht.

8. Generator nach einem der vorhergehenden Ansprüche, wobei das lithiumhaltige Oxid mit polyanionischer Struktur LiFePO₄ ist.

9. Generator nach einem der vorhergehenden Ansprüche, wobei das kohlenstoffhaltige Material Kohlenstoff oder ein Verbundmaterial ist, welches Kohlenstoff und ein chemisches Element ausgewählt aus Sn, Si, umfasst.

10. Generator nach einem der vorhergehenden Ansprüche, wobei das kohlenstoffhaltige Material Kohlenstoff in Form von Graphit ist.

11. Generator nach einem der vorhergehenden Ansprüche, wobei das Mischoxid von Lithium und Titan Li₄T₁₅O₁₂ ist.

12. Generator nach Anspruch 1 umfassend mindestens eine erste elektrochemische Zelle, welche eine positive Elektrode aus LiNi_{0,5}Mn_{1,5}O₄ und eine negative Elektrode aus Graphit umfasst, und mindestens eine zweite elektrochemische Zelle, welche eine positive Elektrode aus LiFePO₄ und eine negative Elektrode aus Li₄Ti₅O₁₂ umfasst.

13. Generator nach einem der vorhergehenden Ansprüche, wobei das elektrisch leitfähige Substrat Aluminium ist.

14. Generator nach einem der vorhergehenden Ansprüche, wobei der Elektrolyt eine ionische Flüssigkeit ist.

15. Generator nach einem der vorhergehenden Ansprüche, welcher mit elektrischen Anschlüssen für die erste elektrochemische Zelle und mit elektrischen Anschlüssen für die zweite elektrochemische Zelle versehen ist.

## Claims

1. An electrochemical generator comprising:
* at least one first electrochemical cell comprising:
- a positive electrode comprising a material selected from lithiated oxides comprising manganese with a spinel structure, lithiated oxides with a lamellar structure and mixtures thereof;
- a negative electrode comprising a material selected from carbonaceous materials, mixed oxides of lithium and titanium, titanium dioxide and mixtures thereof;
- an electrolyte comprised between said positive electrode and said negative electrode; and
* at least one second electrochemical cell comprising:
- a positive electrode comprising a material selected from lithiated oxides with polyanionic structures of formula LiM_{y}(XO_{z})ₙ with M representing an element selected from Mn, Fe, Co, Ni, Cu, Mg, Zn, V, Ca, Sr, Ba, Ti, Al, Si, B and Mo, X representing an element selected from P, Si, Ge, S and As, y, z and n being positive integers;
- a negative electrode comprising a material selected from mixed oxides of lithium and titanium, titanium dioxide and mixtures thereof; and
- an electrolyte comprised between said positive electrode and said negative electrode;
at least one of said first electrochemical cells and at least one of said second electrochemical cells being bound to each other through an electrically conducting substrate supporting on one of its faces an electrode of said first electrochemical cell and on another face an electrode of said second electrochemical cell.

2. The generator according to claim 1, wherein the lithiated oxide comprising manganese with a spinel structure fits the following formula:
Li₁₋ₐNi_{0.5-b}Mn_{1.5-c}O_{4-d}
with a, b, c and d being comprised between -0.5 and +0.5.

3. The generator according to claim 1 or 2, wherein the lithiated oxide comprises manganese with a spinel structure is LiNi_{0.5}Mn_{1.5}O₄.

4. The generator according to claim 1 or 2, wherein the lithiated oxide comprising manganese with a spinel structure is LiMn₂O₄ or LiNiMnO₄.

5. The generator according to claim 1, wherein the lithiated oxide with a lamellar structure fits the following formula:
LiMO₂
wherein M is an element selected from Ni, Co, Mn, Al and mixtures thereof.

6. The generator according to claim 1, wherein the lithiated oxide with a lamellar structure fits the following formula:
LiM₂O₃
wherein M is an element selected from Ni, Co, Mn, Al and mixtures thereof.

7. The generator according to claim 1, wherein the positive electrode of the first electrochemical cell is a material consisting in a mixture of LiMO₂ as defined in claim 5 and of LiM₂O₃ as defined in claim 6.

8. The generator according to any of the preceding claims, wherein the lithiated oxide with polyanionic structures is LiFePO₄.

9. The generator according to any of the preceding claims, wherein the carbonaceous material is carbon or a composite material comprising carbon and a chemical element selected from Sn, Si.

10. The generator according to any of the preceding claims, wherein the carbonaceous material is carbon in the form of graphite.

11. The generator according to any of the preceding claims, wherein the mixed oxide of lithium and titanium is Li₄Ti₅O₁₂.

12. The generator according to claim 1, comprising at least one first electrochemical cell comprising a positive electrode in LiNi_{0.5}Mn_{1.5}O₄ and a negative electrode in graphite and at least one second electrochemical cell comprising a positive electrode in LiFePO₄ and a negative electrode in Li₄Ti₅O₁₂.

13. The generator according to any of the preceding claims, wherein the electrically conducting substrate is aluminium.

14. The generator according to any of the preceding claims, wherein the electrolyte is an ionic liquid.

15. The generator according to any of the preceding claims, being provided with electrical connections to said first electrochemical cell and with electric connections to said second electrochemical cell.
